(19) Europäisches Patentamt
European Patent Office
Office européen des brevets

(11) Veröffentlichungsnummer: **0 514 750 A1**

# (12) EUROPÄISCHE PATENTANMELDUNG

(21) Anmeldenummer: **92108038.8**

(51) Int. Cl.5: **C08F 8/00**, G02F 1/35

(22) Anmeldetag: **13.05.92**

(30) Priorität: **22.05.91 DE 4116594**

(43) Veröffentlichungstag der Anmeldung: **25.11.92 Patentblatt 92/48**

(84) Benannte Vertragsstaaten: **BE CH DE ES FR GB IT LI NL**

(71) Anmelder: **BASF Aktiengesellschaft**
**Carl-Bosch-Strasse 38**
**W-6700 Ludwigshafen(DE)**

(72) Erfinder: **Kilburg, Heike, Dr.**
**Schuberstrasse4**
**W-6720 Speyer(DE)**
Erfinder: **Etzbach, Karl-Heinz, Dr.**
**Carl-Bosch-Ring 55**
**W-6710 Frankenthal(DE)**
Erfinder: **Beck, Karin Heidrun, Dr.**
**Dackenheimer Strasse 3**
**W-6700 Ludwigshafen(DE)**
Erfinder: **Strohrieg, Peter, Dr.**
**Bayreuther Strasse 15a**
**W-8581 Hummeltal(DE)**
Erfinder: **Mueller, Harry**
**Pappenreuth 25**
**W-8860 Muenchberg(DE)**
Erfinder: **Nuyken, Oskar, Dr.**
**Ignaz-Guenther-Strasse 12**
**W-8000 Muenchen(DE)**

## (54) Verfahren zur Herstellung von Polymeren mit NLO-aktiven Seitengruppen und deren Verwendung.

(57) Die Erfindung betrifft ein Verfahren zur Herstellung von (Meth)acrylat-Polymerisaten mit seitenständigen nichtlinear optischen Chromophoren und Molekulargewichten zwischen 5000 und 5000000, dadurch gekennzeichnet, daß man Polymerisate des (Meth)acrylsäurechlorids in polymeranaloger Reaktion in Lösung mit D-ω-Hydroxyalkyl-Chromophoren der allgemeinen Formel (I) oder deren Alkoholaten

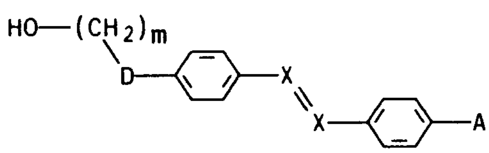

(I) ,

worin

D für einen Elektronendonor,
A für einen Elektronenakzeptor,
X für CH-Gruppen und/oder N-Atome und m = 2 bis 11 stehen,

umsetzt.

Die erfindungsgemäß hergestellten Polymerisate lassen sich in optischen Bauelementen verwenden.

EP 0 514 750 A1

Die vorliegende Erfindung betrifft ein Verfahren zur Herstellung von (Meth)acrylatpolymerisaten mit seitenständigen nichtlinear optischen Chromophoren und Molekulargewichten zwischen 5000 und 5000000, die nach diesem Verfahren erhaltenen Polymerisate sowie deren Verwendung in optischen Bauelementen, insbesondere in der Nachrichtentechnik.

Polymerisate mit seitenständigen nicht linear optischen Chromophoren und deren Herstellung durch radikalisch initiierte Polymerisation von ethylenisch ungesättigten organischen Verbindungen (Methacryl- und Acrylverbindungen), die nichtlinear optische (= NLO) Chromophore als Seitengruppen tragen, sind bereits bekannt und beispielsweise beschrieben von D.R. Robello in J. Polym. Sci; Part A: Polymer Chemistry 28, 1 (1990) sowie in EP-A-0337405, EP-A-0334176, EP-A-0396172, FR-A-2630744 und FR-A-2597109.

Bei der radikalischen Polymerisation von Monomeren mit NLO-Seitengruppen erhält man jedoch infolge der retardierenden Wirkung von Nitro- und Azogruppen nur Produkte mit relativ niedrigen Molekulargewichten von bis zu etwa $\overline{M}_n$ = 25000. Ein weiterer Nachteil ist, daß sich derartige Produkte nicht gut reproduzierbar herstellen lassen. Aus der US-A-4 935 292 sind zwar auch schon funktionalisierte Polymere mit nichtlinear optischen Eigenschaften bekannt, die durch polymeranaloge Umsetzung von Polystyrol, das Zunächst chlormethyliert, dann in das reaktivere Jodmethylderivat überführt wird, das schließlich mit dem Thalliumsalz eines Alkoholchromophors verethert, oder durch Umsetzung mit einem Pyridiniumchromophor quaterniert wird, erhalten werden. Außerdem wird hier die Funktionalisierung von Poly(p-hydroxistyrol) angeführt, wobei über eine nucleophile Substitution des Phenolations des Poly(p-hydroxistyrol)s an das Tosylat des Chromophors das Chromophor über eine Ethergruppe an das Poly(p-hydroxystyrol) angebunden wird. Die in der US-A-4 935 292 beschriebenen Methoden zur Herstellung von Polymeren mit nichtlinear optischen Eigenschaften sind ziemlich aufwendig und bedürfen wegen der Giftigkeit des Thalliums umfangreicher Schutzmaßnahmen. Außerdem sind hier Einschränkungen hinsichtlich der erreichbaren Molekulargewichte der Polymeren und auch auf die Art der Polymeren gegeben. Über polymeranaloge Reaktionen sind neben den erwähnten Polymethacrylaten die Polyacrylate ebenfalls zugänglich. Dem US-Patent sind jedoch keine Angaben über die Molekulargewichtsverteilung und die Reproduzierbarkeit der darin beschriebenen Polymerisate zu entnehmen.

Aufgabe der vorliegenden Erfindung ist es, ein Verfahren zur Herstellung von (Meth)-acrylatpolymerisaten mit seitenständigen nichtlinear optischen Chromophoren aufzuzeigen, das die oben angeführten Nachteile des vorbekannten Standes der Technik nicht oder im wesentlich verringerten Maße aufweist und sich insbesonders durch die Einfachheit des Verfahrens an sich, die gute Reproduzierbarkeit, ein hohes Molekulargewicht und eine enge Molekulargewichtsverteilung der Materialien auszeichnet.

Gegenstand der vorliegenden Erfindung ist ein Verfahren zur Herstellung von (Meth)acrylat-Polymerisaten mit seitenständigen nichtlinear optischen Chromophoren und Molekulargewichten $\overline{M}_n$ zwischen 5 000 und 5000000, das dadurch gekennzeichnet ist, daß man Polymerisate des (Meth)acrylsäurechlorids in polymeranaloger Reaktion in Lösung mit D-ω-Hydroxyalkyl-Chromophoren der allgemeinen Formel (I) oder deren Alkoholaten umsetzt,

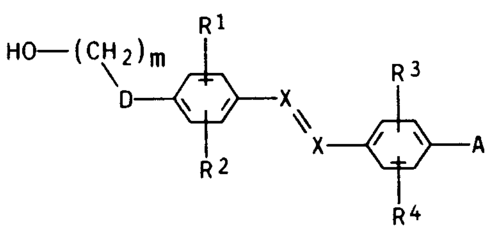

(I)

worin

- D für einen Elektronendonor,
- A für einen Elektronenakzeptor,
- $R^1$, $R^2$, $R^3$ und $R^4$ untereinander gleich oder verschieden sein können und für H, Alkyl mit 1 bis 6 Kohlenstoffatomen, Cycloalkyl mit 5 oder 6 Kohlenstoffatomen, oder $R^3$ und $R^4$ für CN, $NO_2$ oder CHO stehen, oder $R^1$ mit $R^2$ bzw. $R^3$ mit $R^4$ miteinander einen anellierten Ring bilden,
- X für CH-Gruppen oder/und N-Atome

und

- m für eine ganze Zahl von 2 bis 11

stehen.

Vorzugsweise werden als nichtlinear optische D-ω-Hydroxyalkylchromophore der allgemeinen Formel (I) oder deren Alkoholate solche eingesetzt, in denen m für eine ganze Zahl von 2 bis 8 steht.

Als Alkoholate dieser Chromophore bevorzugt sind die Alkalialkoholate, insbesondere die Lithiumalkoholate.

Eine vorteilhafte Ausführungsform des erfindungsgemäßen Verfahrens besteht auch darin, die nichtlinear optischen D-ω-Hydroxyalkylchromophore der allgemeinen Formel (I) oder deren Alkoholate mit Polyacrylsäurechlorid bzw. Polymethacrylsäurechlorid umzusetzen.

Eine weitere Ausgestaltung des erfindungsgemäßen Verfahrens besteht darin, daß man die Umsetzung der Alkohole der allgemeinen Formel (I) bzw. deren Alkoholate mit den (Meth)acrylsäurechlorid-Polymerisaten so führt, daß nach der Umsetzung noch Säurechloridgruppen im Polymerisat vorhanden sind, die anschließend zu Carboxylgruppen hydrolysiert werden oder über eine weitere polymeranaloge Umsetzung weiter funktionalisiert werden können.

Dabei können nach der Umsetzung im Polymerisat noch vorhandenen Säurechloridgruppen über eine weitere polymeranaloge Umsetzung mit vernetzbaren Alkoholen oder vernetzbaren Alkoholaten zur Reaktion gebracht werden, wobei es sich bei den vernetzbaren Alkoholen oder vernetzbaren Alkoholaten z.B. um solche handelt, die am alkoholischen Sauerstoff folgende Gruppierungen gebunden enthalten:

$CH_2=CH-CH_2-$ , 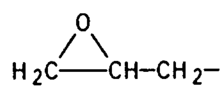 ,

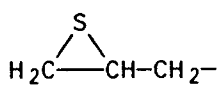 ,

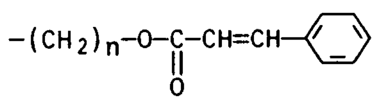 ,

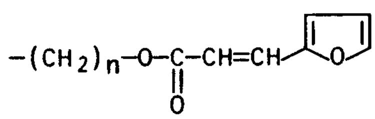 ,

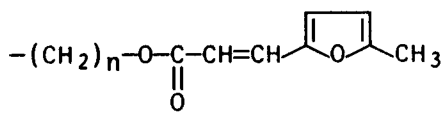 ,

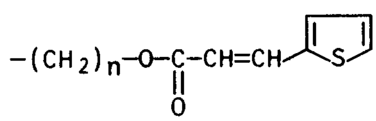 ,

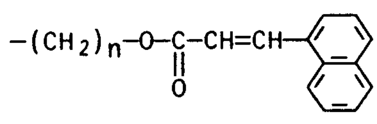 ,

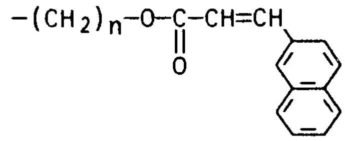 ,

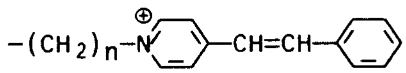 ,

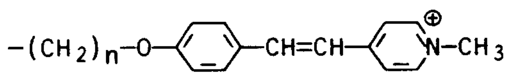 ,

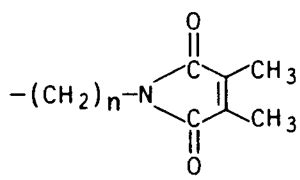 ,

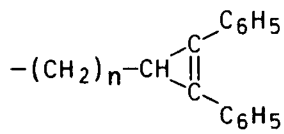 oder

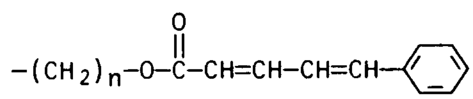

mit n = 1 bis 12.

Gegenstand der vorliegenden Erfindung sind auch die Polymerisate, die wiederkehrende Einheiten der allgemeinen Formel (II)

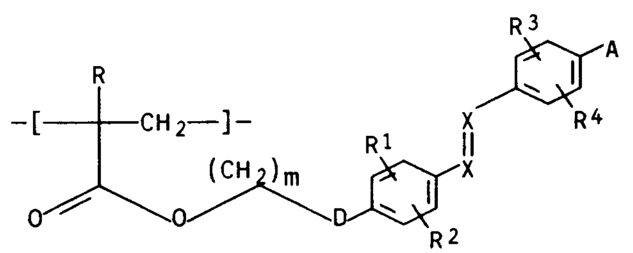 (II),

worin D, A, X, m, $R^1$, $R^2$, $R^3$ und $R^4$ die für Formel (I) angegebene Bedeutung haben und R für Wasserstoff oder eine Methylgruppe steht, eingebaut enthalten oder hieraus aufgebaut sind, wobei diese Polymerisate nach dem erfindungsgemäßen Verfahren hergestellt worden sind. Die erfindungsgemäß hergestellten Polymerisate können als Elektronendonorgruppen D ein Sauerstoffatom O oder eine Gruppe $NR^5$ mit $R^5$ = $C_1$- bis $C_6$-Alkyl oder -Alkenyl, $C_5$- bis $C_7$-Cycloalkyl$_1$ Phenyl-, Benzyl-, Tolyl- oder eine vernetzungsfähigen Gruppe, insbesondere eine Vinyl-, Acryl-, Methacryl-, Oxiranyl- oder Thiiranylgruppe, als Gruppierungen -X=X- -N=N-, -N=CH-, -CH=N- oder -CH=CH-,
als Elektronenakzeptorgruppe A

H, $NO_2$, CN, 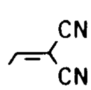 , 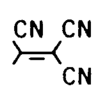 oder 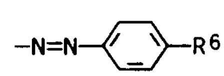

mit
$R^6$ = H, $NO_2$, CN oder CHO enthalten.

Die erfindungsgemäß hergestellten Polymerisate können nur aus wiederkehrenden Einheiten der allgemeinen Formel (II) aufgebaut sein oder sie können zusätzlich zu den wiederkehrenden Einheiten der allgemeinen Formel (II) noch weitere wiederkehrende Comonomer-Einheiten eingebaut enthalten.

Gegenstand der vorliegenden Erfindung ist auch die Verwendung der erfindungsgemäß hergestellten nichtlinear optischen Polymerisate in optischen Bauelementen sowie deren Verwendung in der Nachrichtentechnik.

Das erfindungsgemäße Verfahren zeichnet sich insbesondere dadurch aus, daß sich auf diesem Wege gut reproduzierbar nichtlinear optische Polymerisate mit hohem Molekulargewicht herstellen lassen.

Hohe Molekulargewichte sind wünschenswert, da sich nur daraus hochwertige Filme, wie sie für Anwendungen in der nichtlinearen Optik benötigt werden, herstellen lassen. Außerdem wird die Relaxation der NLO-aktiven Gruppen nach der Ausrichtung im elektrischen Feld bei höhermolekularen Polymeren deutlich zurückgedrängt.

Während die Herstellung von polymerisierbaren ethylenisch ungesättigten monomeren Verbindungen mit nichtlinear optischen Chromophorgruppen, insbesondere hinsichtlich ihrer Reinigung, die durch Säulenchromatographie und anschließendes Umkristallisieren unter erheblichem Zeit- und Materialaufwand (großer Lösungsmittelverbrauch) erfolgen muß, sehr aufwendig ist, ist die Reinigung der zugrundeliegenden die Chromophorgruppen enthaltenden Alkohole, die durch einfaches Umkristallisieren, beispielsweise aus Toluol oder Pyridin/Ethanol (1 : 4) praktisch analysenrein erhalten werden können, viel einfacher. Auch wenn diese Alkohole noch kleine Mengen an Verunreinigungen enthalten, können sie für die polymeranaloge Umsetzung ohne Nachteile für die Folgeprodukte eingesetzt werden, was für die Herstellung der Produkte im technischen Maßstab von besonderem Vorteil ist.

Zum erfindungsgemäßen Verfahren ist im einzelnen folgendes auszuführen.

Homo- und Copolymere des Acrylsäure- oder Methacrylsäurechlorids lassen sich nach üblichen Verfahren, beispielsweise durch radikalische Polymerisation in Lösung aus den Monomeren quantitativ herstellen. Als Lösungsmittel kommen übliche organische Lösungsmittel, wie z.B. Ether, wie Dioxan oder Tetrahydrofuran, Dimethylformamid, N-Methylpyrrolidon, aromatische Kohlenwasserstoffe, wie z.B. Benzol oder Toluol sowie Chlorbenzol und deren Gemische in Frage.

Als Comonomere, die praktisch in allen Mengenverhältnissen mit (Meth)acrylsäurechlorid copolymerisiert werden können, kommen in Frage Ester der Acryl- und der Methacrylsäure mit 1 bis 18, vorzugsweise 1 bis 8 Kohlenstoffatome enthaltenden Alkoholen, wie z.B. Methylmethacrylat, Ethylacrylat, n- und i-Butylacrylat, Hexylacrylat, 2-Ethyl-hexylacrylat sowie Vinylaromaten, wie z.B. Styrol, oder auch andere mit (Meth)acrylsäurechlorid copolymerisierbare ethylenisch ungesättigte Verbindungen sowie Gemische derartiger copolymerisierbarer ethylenisch ungesättigter organischer Verbindungen. Es ist zweckmäßig, die einzusetzenden Monomeren vor der Polymerisation nach den dem Fachmann geläufigen Methoden, z.B. durch Destillation oder Umkristallisieren zu reinigen. Die Homo- bzw. Copolymerisation des (Meth)-acrylsäurechlorids erfolgt üblicherweise in Gegenwart radikalliefernder Katalysatoren, wie z.B. Azodiisobutyronitril, Peroxide, wie Dibenzoylperoxid oder Dilaurylperoxid.

Durch entsprechende Auswahl der Art und Menge an Comonomeren und der Polymerisationsbedingungen, wie Temperatur, Lösungsmittelanteil oder Polymerisationskatalysatormenge lassen sich in der dem Fachmann geläufigen Weise die Eigenschaften und Molekulargewichte der (Meth)-acrylsäurechloridpolymerisate beeinflussen und gezielt einstellen.

Es ist besonders vorteilhaft, die Molekulargewichte dieser Polymerisate auf Bereiche zwischen $\overline{M}_n$ = 20 000 und 500 000, insbesondere von 30 000 bis 100 000 einzustellen.

Die Isolation der (Meth)acrylsäurechloridpolymerisate kann in üblicher Weise durch Ausfällen ihrer Lösungen in möglichst wasserfreien Lösungsmitteln, wie z.B. Methanol, Tetrahydrofuran oder Hexan und Trocknen erfolgen.

Erfindungsgemäß werden die Polymerisate des (Meth)acrylsäurechlorids in polymeranaloger Reaktion in Lösung mit D-ω-Hydroxyalkyl-Chromophoren der allgemeinen Formel (I) oder deren Alkoholaten umgesetzt,

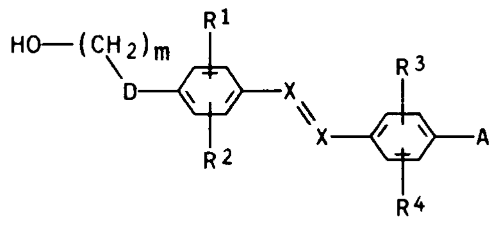

(I)

worin

D für einen Elektronendonor,

A für einen Elektronenakzeptor,

X für eine CH-Gruppe oder/und N-Atome,

$R^1$, $R^2$, $R^3$ und $R^4$ untereinander gleich oder verschieden sein können und für H, Alkyl mit 1 bis 6 Kohlenstoffatomen, Cycloalkyl mit 5 oder 6 Kohlenstoffatomen oder $R^3$ und $R^4$ für CN, $NO_2$ oder CHO stehen, oder $R^1$ mit $R^2$ bzw. $R^3$ mit $R^4$ miteinander einen anellierten Ring bilden

und

m für eine ganze Zahl von 2 bis 11, vorzugsweise 2 bis 8 stehen,

wobei als Alkoholate vorzugsweise die Alkalialkoholate, insbesondere Kalium- oder Lithiumalkoholate in Betracht kommen, die auf übliche Weise durch Umsetzung der D-ω-Hydroxyalkyl-Chromophore mit einer starken Base, z.B. mit Kalium-tert.-butylat, bzw. Na-methylat in wasserfreier Lösung, beispielsweise in Tetrahydrofuran (= THF) oder Dioxan erhalten werden können.

Nach Erreichen von Raumtemperatur kann die Umsetzung mit dem Homopolymer Poly(meth)-acrylsäurechlorid bzw. mit den Copolymeren aus (Meth)acrylsäurechlorid und Methylmethacrylat erfolgen. Die Polymeren können beispielsweise in Methanol/HCl ausgefällt und dreimal aus THF/Methanol umgefällt werden.

Auch eine direkte Veresterung der Alkohole durch polymeranaloge Reaktion in Gegenwart eines Veresterungskatalysators, z.B. mit Dimethylaminopyridin führt zu den gewünschten Produkten.

In der allgemeinen Formel (I) für die D-ω-Hydroxyalkyl-Chromophore kann der Elektronendonor D für Sauerstoff oder eine zweiwertige Gruppe $NR^5$ stehen, wobei $R^5$ für einen Alkylrest mit 1 bis 6 Kohlenstoffatomen, beispielsweise Methyl, Ethyl, Butyl, Hexyl, einen $C_1$-$C_6$-Alkenyl, z.B. Allyl, Hexenyl, für einen Cycloalkylrest mit 5 bis 7 Kohlenstoffatomen, wie z.B. Cyclohexyl, Phenyl, Benzyl, Tolyl oder eine vernetzungsfähige Gruppe, wie z.B. eine Vinyl-, Acryl-, Methacryl-, Oxiranyl- oder Thiiranylgruppe, beispielsweise

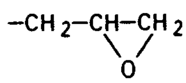 oder 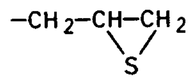

stehen.

Der Elektronenakzeptor A in der allgemeinen Formel (I) kann für Wasserstoff, $NO_2$, CN, CHO oder eine der Gruppierungen

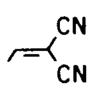 , 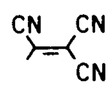 oder 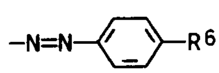

mit $R^6$ = H, $NO_2$, CN oder CHO stehen.

$R^1$, $R^2$, $R^3$ und $R^4$ in den allgemeinen Formel (I) bzw. (II) können für Wasserstoff, Alkylgruppen mit 1 bis 6 Kohlenstoffatomen, beispielsweise Methyl, Ethyl, Isopropyl, n-Butyl, Isobutyl, Hexyl, Cycloalkyl mit 5 oder 6 Kohlenstoffatomen, wie z.B. Cyclohexyl stehen oder $R^1$ kann mit $R^2$ bzw. $R^3$ mit $R^4$ miteinander einen anellierten Ring bilden, z.B. Naphthyl.

Beispiele für derartige D-ω-Hydroxyalkyl-Chromophore sind

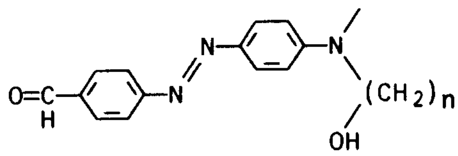

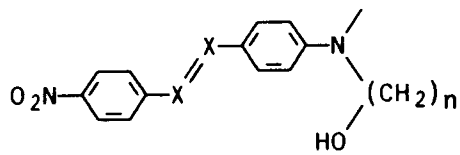

X = N, CH          n = 2, 3, 4, 6

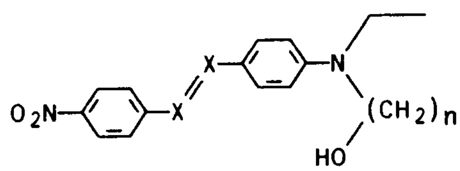

X = N, CH          n = 2, 3, 4, 6

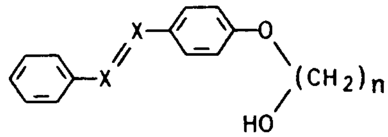

X = N, CH n = 3, 6, 8, 11

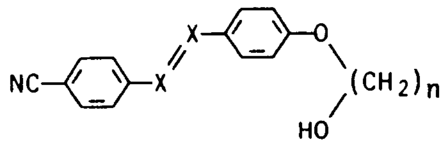

X = N, CH n = 3, 6, 8, 11

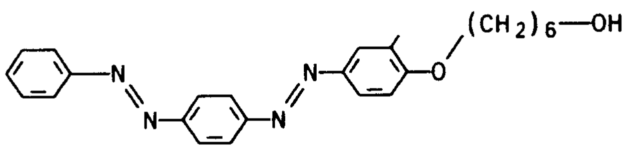

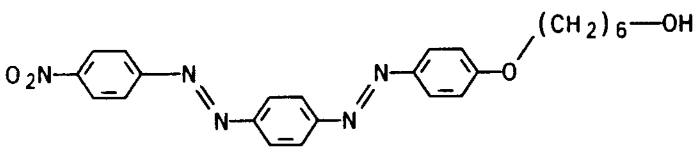

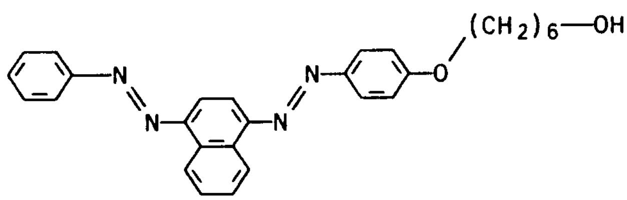

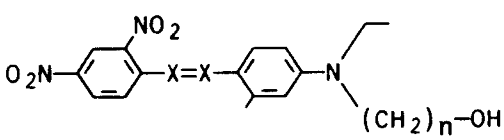

n = 2, 3, 4, 5 X = N, CH

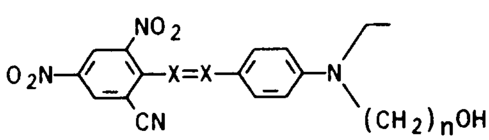

X = N, CH n = 2, 3, 4, 6

Ein weiterer Vorteil des erfindungsgemäßen Verfahrens ist die Möglichkeit, die Relaxation der funktionellen Gruppen zu verhindern, und zwar durch die an eine Polung angeschlossene Vernetzung des Polymeren. Die Einführung von vernetzbaren Gruppen in ein Polymethacrylat durch polymeranaloge Umsetzung ist sehr viel einfacher als die entsprechende Terpolymerisation.

Mögliche zur Vernetzung geeignete Gruppen $R^5$ der obengenannten Arten sind z.B.

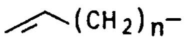 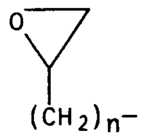 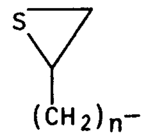

und die oben bereits genannten Zimtsäure-, Styrol-, Maleinimid- und Cyclopropengruppen.

Beispiele für Präpolymerzusammensetzungen, die für die Umsetzung mit den Chromophoralkoholaten eingesetzt werden können sind:

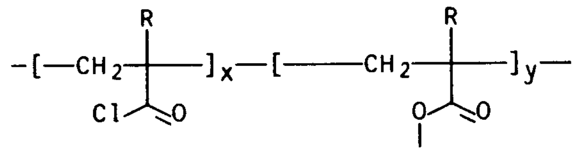

| x | y |
|---|---|
| 1,0 | 0,0 |
| 0,5 | 0,5 |
| 0,4 | 0,6 |
| 0,3 | 0,7 |
| 0,2 | 0,8 |
| 0,1 | 0,9 |

Mit dem erfindungsgemäßen Verfahren ist die Synthese genau definierter Präpolymere mit hohen Molekulargewichten und enger Molekulargewichtsverteilung möglich, wobei hohe Glastemperaturen erreicht werden.

Weitere Vorteile des erfindungsgemäßen Verfahrens sind die gute Reproduzierbarkeit bei der Darstellung der Polymeren, die leichtere Darstellung aufgrund der verminderten Anzahl an Reinigungsschritten der ω-Hydroxyalkylchromophore, die schnelle Reaktionsführung, die Einsparung von Lösungsmitteln, da Säulenchromatographien entfallen, sowie die leichte Weiterfunktionalisierung, d.h. Einführung weiterer funktioneller Gruppen.

Die in den folgenden Beispielen genannten Teile und Prozente sind soweit nicht anders angegeben, Gewichtsteile bzw. Gewichtsprozente.

Herstellung verschiedener Präpolymere durch radikalische Polymerisation:

(I): x = 1,0 y = 0,0

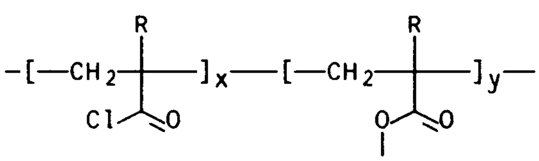

In einem 100 ml Schlenkrohr füllt man 24,15 g (0,25 mol) frisch destilliertes Methacrylsäurechlorid, 0,41 g (0,0025 mol) Azodiisobutyronitril (= AIBN) und 25 ml Dioxan. Die Lösung wird sorgfältig entgast und dann bei 60 °C 48 Stunden lang polymerisiert. Zur Aufarbeitung verdünnt man die viskose Lösung mit Dioxan und fällt das Polymere durch Eingießen der Lösung in trockenes Hexan aus. Das Produkt wird abgesaugt und unter Stickstoff aufbewahrt, um eine Hydrolyse der Säurechloridgruppen zu vermeiden.

Ausbeute: 21 g (81 %) weißes Pulver

IR (Film): 2996, 2975, 1786, 1483, 1446, 1393, 960, 851 $cm^{-1}$.

| Elementaranalyse: $(C_4H_5OCl)_n$ 104,54 | | | | |
|---|---|---|---|---|
| berechnet: | C 45,96 | H 4,82 | 0 15,30 | Cl 33,91 |
| gefunden: | C 46,90 | H 5,00 | 0 15,3 | Cl 33,0 |

GPC: $M_n$ = 33 000; $M_w$ = 68 000; $M_w/M_n$ = 2,1

(II): x = 0,2; Y = 0,8

4,8 g (0,05 mol) Methacrylsäurechlorid, 21,2 g (0,2 mol) Methylmethacrylat und 0,41 g (0,0025 mol) AIBN werden in einem Schlenkrohr in 100 ml Dioxan gelöst und nach dem Entgasen 48 Stunden lang bei 60 °C polymerisiert. Zur Aufarbeitung wird das Produkt in trockenes Hexan ausgefällt.

Ausbeute: 22 g (88 %) weißes Pulver

IR (Film): 2997, 2951, 1788, 1730, 1485, 1448, 1435, 1244, 1194, 1152, 964, 847, 756 $cm^{-1}$.

| Elementaranalyse: | | | | |
|---|---|---|---|---|
| berechnet: | C 57,18 | H 7,40 | O 28,63 | Cl 6,78 |
| gefunden: | C 57,21 | H 7,33 | O 28,5 | Cl 6,75 |

GPC: $M_n$ = 35 000; $\overline{M}_w$ = 85 000; $M_w/M_n$ = 2,43

Beispiel 1

Polymeranaloge Umsetzung des Präpolymeren (x = 0,1, y = 0,9) mit dem Chromophor

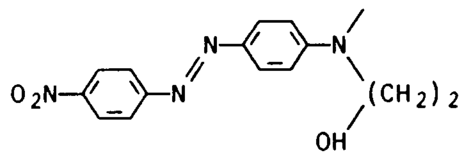

Zu einer Lösung von 4,23 g (0,014 mol) 4-(N-Hydroxyethyl-N-methylamino)-4'-nitroazobenzol in 300 ml trockenem Tetrahydrofuran (= THF) gibt man unter Eiskühlung 13,5 ml (0,013 mol) Kalium-tertiär-butylat (1-molare Lösung in THF). Anschließend läßt man 1 Stunde rühren, tropft dann 9,5 g (0,9 mol COCl-Gruppen) eines Copolymeren aus 90 % Methylmethacrylat (= MMA) und 10 % Methacrylsäurechlorid in 150 ml THF gelöst zu und läßt über Nacht bei Raumtemperatur rühren. Danach wird auf angesäuertes Methanol gefällt. Zur weiteren Reinigung fällt man das Polymere noch dreimal aus THF in Methanol um.

Ausbeute: 10,2 g (85 %)

IR (Film): 1732, 1601, 1589, 1520, 1485, 1441, 1340, 1242, 1150, 990, 858, 754, 667 $cm^{-1}$.

| Elementaranalyse: | | | | | |
|---|---|---|---|---|---|
| berechnet: | C 60,55 | H 7,31 | N 4,41 | O 27,73 | Cl - |
| gefunden: | C 60,28 | H 7,40 | N 3,98 | O 27,90 | Cl 0,07 |

GPC: $M_n$ = 40 000; $M_w$ = 95 000; $M_w/M_n$ = 2,4

Beispiel 2

Zu einer Lösung von 1,47 g (0,005 mol) 4-(6-Hydroxyhexyloxy)-azobenzol in 20 ml trockenem Tetrahydrofuran (= THF) tropft man 0,005 mol Kalium-tertiär-butylat (1-molare Lösung in THF). Anschließend gibt man 0,31 g (0,003 mol) Poly(methacrylsäurechlorid) in 10 ml THF zu und läßt über Nacht bei Raumtemperatur rühren. Das Polymere wird in Methanol ausgefällt und anschließend noch dreimal aus THF in Methanol umgefällt.

Ausbeute: 0,8 g (73 %)

IR (Film): 1726, 1602, 1582, 1503, 1260, 1142, 839, 768, 687 $cm^{-1}$.

| Elementaranalyse: | | | | | |
|---|---|---|---|---|---|
| berechnet: | C 72,11 | H 7,15 | N 7,64 | O 13,10 | Cl - |
| gefunden: | C 70,01 | H 7,18 | N 7,49 | 0 13,8 | Cl 0,1 |

GPC: $M_n$ = 56 100; $M_w$ = 131 800; $M_w/M_n$ = 2,3

Beispiel 3

Zu einer Lösung von 0,71 g (0,002 mol) 4-(6-Hydroxyhexyl-N-methylamino)-4'-nitroazobenzol in 30 ml wasserfreiem Dioxan gibt man unter Rühren und unter Wasserausschluß in einer Stickstoffatmosphäre eine Lösung von 0,51 g (0,005 mol) Copolymer (x = 0,2; y = 0,8; entspricht 0,001 mol Säurechloridgruppen) in 30 mol Dioxan bei Raumtemperatur unter Rühren zu. Nach dem Zutropfen von 0,5 g (0,004 mol) Dimethylaminopyridin (DMAP) in 4,5 ml (0,056 mol) Pyridin wird unter Rückfluß erhitzt. Nach 2 Tagen ist der Umsatz nahezu quantitativ und die Lösung wird auf ein Gemisch aus 300 ml Methanol und 1 ml konzentrierter Salzsäure ausgefällt, das Polymer abgesaugt, im Exsikkator getrocknet und dreimal aus THF in Methanol umgefällt.

Ausbeute: 0,7 g (90 %) rotes Polymer

IR (Film): 1805, 1759, 1730, 1601, 1587, 1518, 1449, 1381, 1244, 1138, 856, 756, 691 $cm^{-1}$.

| Elementaranalyse: | | | | | |
|---|---|---|---|---|---|
| berechnet: | C 62,61 | H 7,33 | O 23,27 | N 6,79 | Cl - |
| gefunden: | C 62,50 | H 7,26 | O 23,02 | N 6,66 | Cl 0,27 |

Beispiel 4

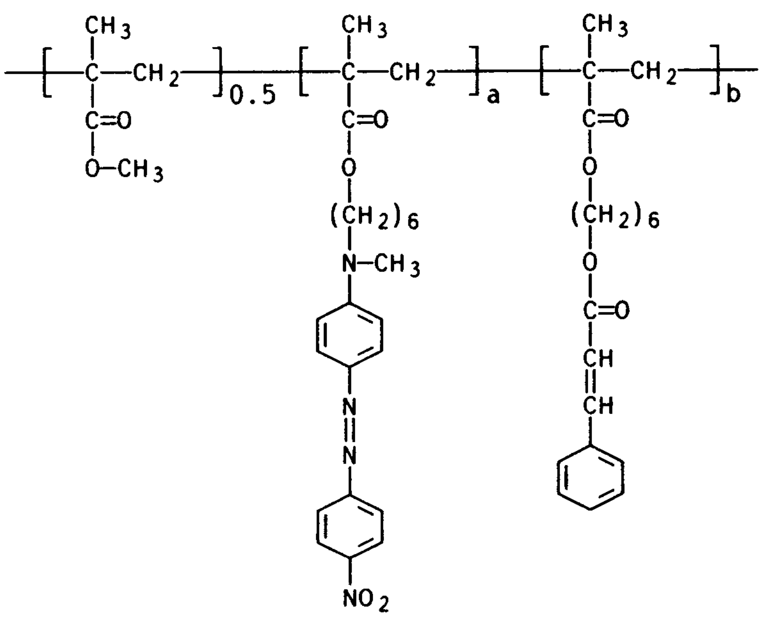

Zu einer Lösung von 1,78 g (5 mMol) 4-(N-Hydroxyhexyl-N-methylamino)-4'-nitroazobenzol (M = 356,43 g/mol), 1,24 g (5 mMol) Zimtsäure-(6-Hydroxyhexyl)ester und 10 ml (124 mMol) Pyridin in 20 ml wasserfreiem Dioxan gibt man in einer Stickstoffatmosphäre unter Wasserausschluß eine Lösung von 1,02 g (10 mMol) Copolymere aus Methacrylsäurechlorid und Methacrylsäuremethylester(Molverhältnis 1:1) (M = 102,33 g/mol) (entspricht 5 mMol Säurechloridgruppen) in 10 ml Dioxan bei Raumtemperatur unter Rühren zu.

Man erhitzt die gerührte Lösung zum Rückfluß und gibt nach 1 Tag 1,22 g (10 mMol) Dimethylaminopyridin (DMAP) zu. Nach insgesamt 2 Tagen ist der Umsatz nahezu quantitativ und die Lösung wird in einem Gemisch aus 300 ml Methanol mit 2 ml konzentrierter Salzsäure ausgefällt, das Polymer abgesaugt, im Exsikkator getrocknet und dreimal aus THF in Methanol umgefällt. Es resultieren 1,5 g (64 %) Polymer.

IR (Film): 1805 und 1759 (Anhydrid), 1728 (-C=O), 1638 (C=C des Zimtsäurerestes), 1601, 1587, 1518, 1451, 1383, 1256, 1169, 1138, 1103, 993, 858, 756 $cm^{-1}$

GPC: $M_n$ = 20 800; $M_w$ = 55.400; $M_w/M_n$ = 2,7

Beispiel 5

Aus den gemäß Beispiel 2 und 3 hergestellten NLO-aktiven Polymerisaten werden dünne Polymerschichten durch Spincoating 20 %iger Lösungen auf Substrate aufgebracht, die mit einer transparenten Elektrode versehen sind. Nach Beschichtung und Trocknung wird eine weitere transparente Elektrode aufgebracht. Die so hergestellten Sandwichproben werden bei der Erweichungstemperatur gepolt, anschließend auf Raumtemperatur abgekühlt und dann auf die Modulation der Doppelbrechung untersucht. Über bekannte Rechenoperationen werden die Dämpfung und die elektrooptischen Koeffizienten bestimmt. Die so hergestellten Proben zeigen gute elektrooptische Koeffizienten und sind so für die Anwendung in neuen optisch nichtlinearen Anordnungen verwendbar.

## Patentansprüche

1. Verfahren zur Herstellung von (Meth)acrylat-Polymerisaten mit seitenständigen nichtlinear optischen Chromophoren und Molekulargewichten $\overline{M}_n$ zwischen 5000 und 5000000, dadurch gekennzeichnet, daß man Polymerisate des (Meth)acrylsäurechlorids in polymeranaloger Reaktion in Lösung mit D-ω-Hydroxyalkyl-Chromophoren der allgemeinen Formel (I) oder deren Alkoholaten umsetzt,

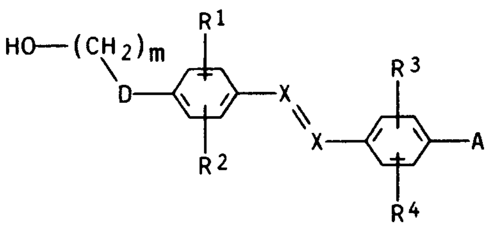

(I)

worin

| | |
|---|---|
| D | für einen Elektronendonor, |
| A | für einen Elektronenakzeptor, |
| $R^1$, $R^2$, $R^3$ und $R^4$ | untereinander gleich oder verschieden sein können und für H, Alkyl mit 1 bis 6 Kohlenstoffatomen, Cycloalkyl mit 5 oder 6 Kohlenstoffatomen, oder $R^3$ und $R^4$ für CN, $NO_2$ oder CHO stehen, oder $R^1$ mit $R^2$ bzw. $R^3$ mit $R^4$ miteinander einen anellierten Ring bilden, |
| X | für CH-Gruppen oder/und N-Atome |

und

m für eine ganze Zahl von 2 bis 11

stehen.

2. Verfahren nach Anspruch 1, dadurch gekennzeichnet, daß man als nichtlinear optische D-ω-Hydroxyalkylchromophore der allgemeinen Formel (I) oder deren Alkoholate solche einsetzt, in denen m für eine ganze Zahl von 2 bis 8 steht.

3. Verfahren nach Anspruch 1 oder 2, dadurch gekennzeichnet, daß man für die polymeranaloge Umsetzung als Alkoholate die Alkalialkoholate der nichtlinear optischen D-ω-Hydroxyalkylchromophore der allgemeinen Formel (I) einsetzt.

4. Verfahren nach Anspruch 3, dadurch gekennzeichnet, daß man für die polymeranaloge Umsetzung als Alkalialkoholate die Lithiumalkoholate einsetzt.

5. Verfahren nach einem der Ansprüche 1 bis 4, dadurch gekennzeichnet, daß man nichtlinear optische D-ω-Hydroxyalkylchromophore der allgemeinen Formel (I) oder deren Alkoholate mit Polyacrylsäurechlorid umsetzt.

6. Verfahren nach einem der Ansprüche 1 bis 4, dadurch gekennzeichnet, daß man nichtlinear optische D-ω-Hydroxyalkylchromophore der allgemeinen Formel (I) oder deren Alkoholate mit Polymethacrylsäurechlorid umsetzt.

7. Verfahren nach einem der Ansprüche 1 bis 6, dadurch gekennzeichnet, daß man die Umsetzung der

Alkohole der allgemeinen Formel (I) bzw. deren Alkoholate mit den (Meth)acrylsäurechlorid-Polymerisaten so führt, daß nach der Umsetzung noch Säurechloridgruppen im Polymerisat vorhanden sind, die anschließend zu Carboxylgruppen hydrolysiert werden oder über eine weitere polymeranaloge Umsetzung weiter funktionalisiert werden können.

8. Verfahren nach Anspruch 7, dadurch gekennzeichnet, daß die nach der Umsetzung im Polymerisat noch vorhandenen Säurechloridgruppen über eine weitere polymeranaloge Umsetzung mit vernetzbaren Alkoholen oder vernetzbaren Alkoholaten zur Reaktion gebracht werden.

9. Verfahren nach Anspruch 8, dadurch gekennzeichnet, daß es sich bei den vernetzbaren Alkoholen oder vernetzbaren Alkoholaten um solche handelt, die am alkoholischen Sauerstoff folgende Gruppierungen gebunden enthalten:

$CH_2{=}CH{-}CH_2{-}$ , 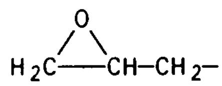 ,

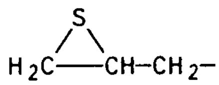 ,

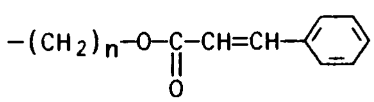 ,

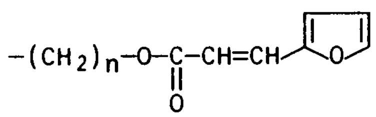 ,

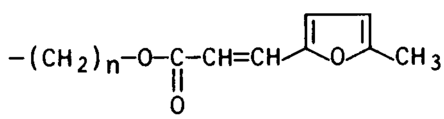 ,

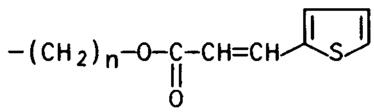,

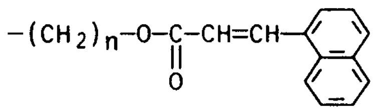,

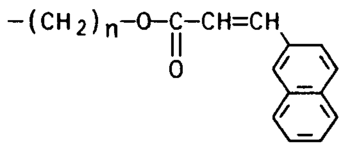,

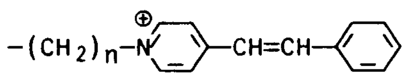,

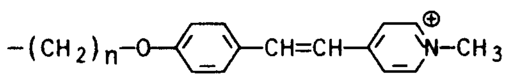,

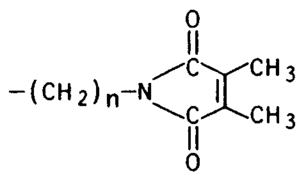,

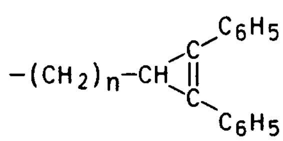

oder

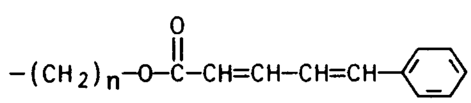

mit n = 1 bis 12.

**10.** Polymerisate, die wiederkehrende Einheiten der allgemeinen Formel (II) eingebaut enthalten oder hieraus aufgebaut sind

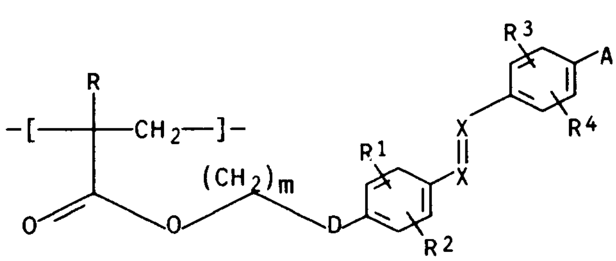

(II),

worin D, A, X, m, $R^1$, $R^2$, $R^3$ und $R^4$ die in Anspruch 1 angegebene Bedeutung haben und R für ein Wasserstoffatom oder eine Methylgruppe steht, dadurch gekennzeichnet, daß sie nach einem Verfahren gemäß einem der Ansprüche 1 bis 9 hergestellt worden sind.

**11.** Polymerisate nach Anspruch 10, dadurch gekennzeichnet, daß D für $NR^5$ oder O, -X = X- für -N = N-, -N = CH-, -CH = N- oder -CH = CH-,

A für H, $NO_2$, CN, CHO,

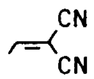 , 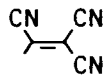 oder 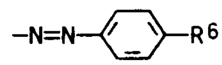 ,

$R^5$ für $C_1$-$C_6$-Alkyl oder -Alkenyl, $C_5$- bis $C_7$-Cycloalkyl, Phenyl, Benzyl, Tolyl oder eine vernetzungsfähige Gruppe und

$R^6$ für H, $NO_2$, CN oder CHO stehen.

**12.** Polymerisate nach Anspruch 11, dadurch gekennzeichnet, daß sie als vernetzungsfähige Gruppe $R^5$ eine Vinyl-, Methacryl-, Acryl-, Oxiranyl- oder Thiiranylgruppe enthalten.

**13.** Polymerisate nach einem der Ansprüche 10 bis 12, dadurch gekennzeichnet, daß sie nur aus wiederkehrenden Einheiten der allgemeinen Formel (II) aufgebaut sind.

**14.** Polymerisate nach einem der Ansprüche 10 bis 12, dadurch gekennzeichnet, daß sie zusätzlich zu den wiederkehrenden Einheiten der allgemeinen Formel (II) noch weitere wiederkehrende Comonomer-Einheiten eingebaut enthalten.

**15.** Verwendung der nichtlinear optischen Polymerisate nach einem der Ansprüche 8 bis 14, in optischen Bauelementen.

**16.** Verwendung der optischen Bauelemente nach Anspruch 15 in der Nachrichtentechnik.

Europäisches Patentamt

# EUROPÄISCHER RECHERCHENBERICHT

Nummer der Anmeldung

EP 92 10 8038

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,Y | EP-A-0 482 985 (THOMSON-CSF)<br>* das ganze Dokument * | 1-16 | C08F8/00<br>G02F1/35 |
| Y | EUROPEAN POLYMER JOURNAL<br>Bd. 18, Nr. 8, 1982, OXFORD<br>Seiten 651 - 659;<br>V.P.SHIBAEV, S.G.KOSTROMIN, N.A.PLATE: 'THERMOTROPIC LIQUID-CRYSTALLINE POLYMERS - VI' | 1-16 | |
| D,Y | EP-A-0 337 405 (HOECHST CELANESE CORPORATION)<br>* Ansprüche * | 1-16 | |
| D,A | FR-A-2 630 744 (THOMSON CSF)<br>* das ganze Dokument * | 1,2,8-16 | |
| A | EP-A-0 410 205 (RÖHM GMBH)<br>* das ganze Dokument * | 1,2,10, 11,13-16 | |

RECHERCHIERTE SACHGEBIETE (Int. Cl.5)

C08F
G02F

Der vorliegende Recherchenbericht wurde für alle Patentansprüche erstellt

| Recherchenort | Abschlußdatum der Recherche | Prüfer |
|---|---|---|
| DEN HAAG | 31 JULI 1992 | KAUMANN E.K.-H. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument